# EUROPEAN PATENT APPLICATION

(11) **EP 1 867 691 A1**
(43) Date of publication of application: **19.12.2007**
(21) Application number: 06729435.5
(22) Date of filing: 17.03.2006
(51) Int. Cl.: C09D 11/02, C09C 1/48, C09C 3/10

(54) **PROCESS FOR PRODUCING INK COMPOSITION FOR OFFSET PRINTING AND INK COMPOSITION FOR OFFSET PRINTING PRODUCED BY SAID PRODUCTION PROCESS**

(30) Priority: 31.03.2005 JP 2005103727
(71) Applicant: SAKATA INX CORPORATION, Osaka-shi, Osaka 550-0002 (JP)
(72) Inventor: ARAKI, Takashi, SAKATA INX CORP., Osaka-shi, Osaka, 550-0002 (JP); FUNAHASHI, Hiroaki, SAKATA INX CORP., Osaka-shi, Osaka, 550-0002 (JP); KATAURA, Yuichi, SAKATA INX CORP., Osaka-shi, Osaka, 550-0002 (JP)
(74) Representative: Hart Davis, Jason
(86) International application number: PCT/JP2006/305446
(87) International publication number: WO 2006/109430

(57) **Abstract**

It is an object of the present invention to provide a method of producing an ink composition for offset printing, which can improve the productivity of inks considerably, and the ink composition for offset printing obtained by the production method. The present invention pertains to a method of producing an ink composition for offset printing, including the steps of wetting 300 parts by mass of a neutral carbon black with 30 to 900 parts by mass of a wetting agent containing at least water, performing flushing of the wetted neutral carbon black using an oil-based varnish for a printing ink containing at least one component of four components consisting of gilsonite, an aliphatic hydrocarbon resin having a softening point of 120 to 125°C, extracted from gilsonite, a petroleum resin and a heavy oil, and then removing the wetting agent.

## Description

### TECHNICAL FIELD

The present invention relates to a method of producing an ink composition for offset printing and the ink composition for offset printing obtained by the method.

### BACKGROUND ART

In the area of offset printing having the form of penetration drying, printing on woody paper or newspaper is characterized by printing at a high speed and in large numbers. In addition, the focus is on providing more information at low cost, and recently there is a tendency of valuing the cost such as material cost and productivity together with printing quality. For example, weight saving of paper used in printing is proceeding further, and even though a piece of paper has rough grain and a surface with projections and depressions, the paper is selected in favor of permeability.

In response to such a situation, in the black ink composition for penetration drying offset printing, new-formula ink compositions are designed and a low-priced neutral powder carbon black is employed as a carbon black so that an ink composition having cost advantage can be provided.

The black ink composition for penetration drying offset printing has been hitherto prepared by an extremely simple production method in which the neutral powder carbon black is used and mixed in an oil-based varnish for a printing ink, and milled and dispersed in the varnish, but the neutral powder carbon black is inferior in wettability on the oil-based varnish for a printing ink, which is an essential property, and therefore in this production method, extra facilities and production cost were required.

By the way, since the neutral powder carbon black is much lighter than other pigments and its particle is fine, the powder easily flies in the air to become dust particles, but recently, utilization of the neutral carbon black of a bead type, which hardly causes dust particles, is desired since hygiene control in a working environment is becoming severe. In addition, the neutral bead carbon black, which has been produced particularly for the purpose of improving the durability of general rubber and tires, is less expensive and has higher cost advantage. But the neutral carbon black is a particle which is inherently hardly dispersed, and when the neutral bead carbon black (particularly a neutral bead carbon black produced for the purpose of improving the durability of general rubber and tires) obtained by enlarging its particle size is used, dispersion in the oil-based varnish for a printing ink becomes very difficult.

As described above, there are many advantages if the neutral bead carbon black can be utilized in an ink area, but the neutral bead carbon black had a problem that it cannot be dispersed to an adequate degree by a conventional dispersion method and the productivity decreases considerably.

In order to solve this problem, an ink composition for offset printing is proposed, which is obtained by putting the neutral carbon black and a resin for a printing ink which is solid at room temperature in a dry mill to be dry-milled in advance, mixing the resulting milled mixture in a mixture of a solvent for a printing ink and a varnish while stirring, and then milling/dispersing the mixture with a roll mill or the like (for example, refer to Patent Document 1).

However, this method had a problem that a facility for dry-milling (dry type attritor, ball mill, vibration mill, or the like) is newly needed and determination of optimal milling conditions is difficult, and further, it is inevitable that the number of production steps increases and therefore production time and energy cost increase.

Patent Document 1: Japanese Kokai Publication No. 2002-327143

### SUMMARY OF THE INVENTION

As described above, a conventional method of producing a printing ink had a problem that extra facilities and production cost were required. Accordingly, it is an object of the present invention to provide a method of producing an ink composition for offset printing, which can improve the productivity of inks considerably by use of the neutral carbon black (particularly the neutral bead carbon black), and the ink composition for offset printing obtained by the production method.

In order to solve the above-mentioned problems, the present inventors made earnest investigations, and consequently found that these problems can be solved by wetting the neutral carbon black with a wetting agent containing at least water, and then performing flushing using an oil-based varnish for a printing ink containing at least one component of four components consisting of gilsonite, an aliphatic hydrocarbon resin having a softening point of 120 to 125°C, extracted from gilsonite, a petroleum resin and a heavy oil. These findings have now led to completion of the present invention.

That is, the present invention pertains to (1) a method of producing an ink composition for offset printing, including the steps of
wetting 300 parts by mass of a neutral carbon black with 30 to 900 parts by mass of a wetting agent containing at least water,
performing flushing of the wetted neutral carbon black using an oil-based varnish for a printing ink containing at least one component of four components consisting of gilsonite, an aliphatic hydrocarbon resin having a softening point of 120 to 125°C, extracted from gilsonite, a petroleum resin and a heavy oil, and then
removing the wetting agent.

In addition, the present invention pertains to (2) the method of producing an ink composition for offset printing as described in (1), further including the step of
milling with a roll mill or a bead mill after completion of the steps of wetting, performing flushing and then removing the wetting agent.

In addition, the present invention pertains to (3) the method of producing an ink composition for offset printing as described in (1) or (2),
wherein a neutral carbon black having a bulk density of 0.1 to 0.8 g/cm³ and an average primary particle diameter of 15 to 70 nm is used as the neutral carbon black.

In addition, the present invention pertains to (4) the method of producing an ink composition for offset printing as described in any one of (1) to (3),
wherein the neutral carbon black is a neutral bead carbon black having a bulk density of 0.3 to 0.8 g/cm³ and an average primary particle diameter of 15 to 70 nm.

Further, the present invention pertains to (5) an ink composition for offset printing prepared by the method of producing an ink composition for offset printing as described in any one of (1) to (4).

Further, the present invention pertains to (6) the ink composition for offset printing as described in (5),
wherein the ink composition for offset printing is an ink composition for penetration drying offset printing.

### DETAILED DESCRIPTION OF THE INVENTION

Hereinafter, the present invention will be described in more detail.

### <Constituent materials used in the method of producing an ink composition for offset printing of the present invention>

Constituent materials used in the method of producing an ink composition for offset printing of the present invention will be described.
First, the carbon black is not particularly limited as long as it is a neutral carbon black having a pH value of 6.0 to 8.0, but the production method of the present invention is effective for a neutral carbon black having a bulk density of 0.1 to 0.8 g/cm³ and an average primary particle diameter of 15 to 70 nm, and in particular, more effective for a neutral bead carbon black having a pH value of 6.0 to 8.0 and a bulk density of 0.3 to 0.8 g/cm³ and an average primary particle diameter of 15 to 70 nm. Among the neutral bead carbon blacks, a neutral bead carbon black for color and a neutral bead carbon black for rubber are particularly effective in view of the objects of the present invention because they hardly cause dust particles and are low-priced and hard to disperse compared with the neutral powder carbon black.

The bulk density was measured according to JIS K 6219.

The average primary particle diameter is an arithmetic mean value of particle diameters determined by the observation of particles through an electron microscope.

Incidentally, the "bead carbon black" refers to a carbon black in the form of bead prepared by granulating the powder carbon black.

Next, in the present invention, in order to wet the neutral carbon black, a wetting agent containing at least water is used. As the wetting agent, water can be used and a solvent compatible with water which can be used in combination with water can be used as required, but it is preferred to reduce an amount of the solvent compatible with water as far as possible from the viewpoint of environment and the wettability of the neutral carbon black. Specifically, the wetting agent preferably contains water in an amount of 50% by mass or more of the total amount of the wetting agent, and it is particularly preferred that the wetting agent contains only water. When the amount of water is less than 50% by mass, wettability tends to decrease. In addition, kinds of water to be used is not particularly limited, and for example, running water, ion-exchange water, distilled water can be used, but it is preferred to use ion-exchange water in that the content of water-soluble ionic substances having negative effects on printing is small.

The solvent compatible with water is not particularly limited, and examples of the solvent include ethanol, ethylene glycol and the like.

An amount of the wetting agent with which the neutral carbon black is wetted is 30 to 900 parts by mass with respect to 300 parts by mass of the neutral carbon black, and is preferably 150 to 600 parts by mass in consideration of a significant improvement in productivity, a significant improvement in printed paper quality by the improvement in the wettability of the neutral carbon black, ease of removal of the wetting agent containing water, and the like. When the amount of the wetting agent is less than 30 parts by mass, good dispersibility cannot be attained and there is a problem of deterioration of workability due to flying of the neutral carbon black in the stirring operation or the like. On the other hand, when the amount of the wetting agent is more than 900 parts by mass, there are problems that the productivity is decreased since the time required to remove the wetting agent becomes longer and an extra treatment is needed since an amount of the wetting agent to be removed increases.

Next, the four components of gilsonite, an aliphatic hydrocarbon resin having a softening point of 120 to 125°C, extracted from gilsonite, a petroleum resin and a heavy oil, which are components of the oil-based varnish for a printing ink, will be described.

Gilsonite, as defined in JIS K 5500, refers to asphaltite from Utah State, and is a kind of hard bitumen, and it is used as an element for forming a coat of a good quality black varnish. In the present invention, as the gilsonite, gilsonite which is hitherto used in black inks for offset printing can be used, and for example, products commercially available from American Gilsonite Company or the like can be used.

As the aliphatic hydrocarbon resin having a softening point of 120 to 125°C extracted from gilsonite, an aliphatic hydrocarbon resin having a softening point of 120 to 125°C extracted from gilsonite, that is natural asphaltite, can be used, and for example, Gilsonite ER 125 commercially available from American Gilsonite Company or the like can be used. The aliphatic hydrocarbon resin having a softening point of 120 to 125°C extracted from gilsonite to be used in the present invention does not contain aromatic hydrocarbons, ash and light fractions in gilsonite, and has high solubility in an aliphatic ink solvent and a vegetable oil component. By the way, the term "softening point", herein, refers to a value measured according to ASTM E28-92.

The heavy oil refers to black or blackish brown liquid, semi-solid, or solid mineral oils having a high boiling point, which are obtained in treating coal-liquefied oil, petroleum, sand oil, shale oil or the like, as defined in JIS M 0104. In the present invention, the heavy oil is not particularly limited, and the above-mentioned heavy oils which are obtained in treating coal-liquefied oil, petroleum, sand oil, shale oil or the like can be used, and for example, a petroleum heavy oil obtained by thermal cracking of petroleum naphtha can be used. Further, it is preferred to use petroleum heavy oils which satisfy the Regulations of OSHA in the US and PCA Standards of EU in consideration of recent environmental concern.

The petroleum resin refers to a resin in which petroleum unsaturated hydrocarbons are a direct raw material and cyclopentadiene or higher olefin hydrocarbons are a main raw material. In the present invention, the petroleum resin is not particularly limited, and a rosin phenolic resin modified petroleum resin formed by modifying a petroleum resin with phenol can be employed in addition to the petroleum resins predominantly composed of the above-mentioned raw materials. Specific examples of the petroleum resin include commercialized products such as Nisseki Neopolymer grade 120 (produced by Nippon Oil Corp.).

These four components consisting of gilsonite, an aliphatic hydrocarbon resin having a softening point of 120 to 125°C, extracted from gilsonite, a petroleum resin and a heavy oil may be appropriately selected to be used, and one component, two components, three components, or four components of them may be contained in the oil-based varnish for a printing ink, but it is preferred that the gilsonite and/or the aliphatic hydrocarbon resin having a softening point of 120 to 125°C, extracted from gilsonite, is/are contained in the oil-based varnish for a printing ink.

As for an amount of the above-mentioned four components to be added at the time of flushing, when the heavy oil is not used, the total amount of three components to be added other than the heavy oil is preferably in a range of 1 to 60% by mass with respect to 100% by mass of the neutral carbon black, and when the heavy oil is used, the total amount of the four components to be added is preferably in a range of 1 to 150% by mass with respect to 100% by mass of the neutral carbon black.
In addition, it is more preferred to contain the gilsonite and the aliphatic hydrocarbon resin having a softening point of 120 to 125°C extracted from the gilsonite in the total amount of 1 to 60% by mass, preferably 1 to 25% by mass, with respect to 100% by mass of the neutral carbon black at the time of flushing.
When the total amount of the above-mentioned components to be added is less than 1% by mass with respect to the neutral carbon black, the dispersibility is not adequate, and on the other hand, when the total amount is more than 60% by mass (in the case of not using the heavy oil) or more than 150% by mass (in the case of using the heavy oil), excessive emulsification of wetting water to the resulting ink composition for offset printing occurs and this tends to have a detrimental effect on printing suitability. However, since an adequate amount of these components to be used varies with the species of these materials as well as the species or use amount of the neutral carbon black or other materials used in combination, it is preferred to select an adequate amount of the components to be used within the above-mentioned range.

As the oil-based varnish for a printing ink to be used for the production method of the present invention, at least one component of the four components consisting of gilsonite, an aliphatic hydrocarbon resin having a softening point of 120 to 125°C, extracted from gilsonite, a petroleum resin and a heavy oil is used in conjunction with a binder resin and an oily liquid.

As the above-mentioned binder resin, rosin modified phenolic resins, rosin modified maleic resins, and polyester resins not containing phenol, used in inks for offset printing, can be used without particular limitation. In addition, alkyd resins can be used together as required.

It is proper that the total use amount of the gilsonite and the aliphatic hydrocarbon resin having a softening point of 120 to 125°C, extracted from the gilsonite, the petroleum resin and the binder resin in the ink composition for offset printing is generally in a range of 10 to 60% by mass when the total mass of the ink composition for offset printing is taken as 100% by mass.

It is preferred that the total use amount of the heavy oil and the oily liquid in the ink composition for offset printing is in a range of 20 to 80% by mass with respect to the whole oil-based varnish for a printing ink.

As the oily liquid, vegetable oil components and mineral oil components can be used.
Examples of the vegetable oil components include vegetable oils and fatty acid ester compounds derived from a vegetable oil.
As the vegetable oil, drying oils or semi-drying oils suitable for offset printing such as a soybean oil, a cotton seed oil, a linseed oil, a safflower oil, a tung oil, a tall oil, a dehydrated caster oil and a canola oil can be exemplified. These oils may be used singly or in combination of two or more species.

Examples of the fatty acid ester compounds derived from a vegetable oil include monoalkyl ester compounds of fatty acids derived from the drying oils or semi-drying oils. As a fatty acid composing such fatty acid monoester, a saturated or unsaturated fatty acid having 16 to 20 carbon atoms is preferred, and stearic acid, isostearic acid, hydroxystearic acid, oleic acid, linoleic acid, linolenic acid, eleostearic acid and the like can be exemplified. Alkyl groups derived from an alcohol, which composes the fatty acid monoester, are preferably groups having 1 to 10 carbon atoms, and alkyl groups of methyl, ethyl, propyl, isopropyl, butyl, isobutyl, t-butyl, 2-ethylhexyl or the like can be exemplified. These fatty acid monoesters can be used alone or in combination of two or more species.

Examples of the mineral oil components include substances which are not compatible with water, and have a boiling point of 160°C or higher, preferably a boiling point of 200°C or higher. Specifically, n-paraffinic solvents, isoparaffinic solvents, naphthenic solvents, aromatic solvents, α-olefinic petroleum solvents, light gas oil, spindle oil, machine oil, cylinder oil, turpentine oil, mineral spirits and the like can be exemplified.

In the oil-based varnish for a printing ink, as for vegetable oil components and mineral oil components which are used as solvent, a vegetable oil component may be used singly, and a fatty acid ester or a mineral oil may be used singly, and the vegetable oil component may be used in conjunction with the mineral oil component.

Furthermore, additives such as a gelling agent, a drier, a drying-retarder, an antioxidant, an anti scumming aid, a friction resistance improver, an antioffset agent and a nonionic surfactant, and the like can be appropriately used as required.

### <Method of producing an ink composition for offset printing of the present invention>

Next, the method of producing an ink composition for offset printing of the present invention will be described.
The present invention pertains to the method of producing an ink composition for offset printing, including the steps of wetting 300 parts by mass of a neutral carbon black with 30 to 900 parts by mass of a wetting agent containing at least water, performing flushing of the wetted neutral carbon black using an oil-based varnish for a printing ink containing at least one component of four components consisting of gilsonite, an aliphatic hydrocarbon resin having a softening point of 120 to 125°C, extracted from gilsonite, a petroleum resin and a heavy oil, and then removing the wetting agent.

In the method of producing an ink composition for offset printing of the present invention, an apparatus to wet the neutral carbon black is not particularly limited, but either a disper or a flusher (kneader) is preferably used.

In the method of producing an ink composition for offset printing of the present invention, "flushing" refers to a step of mixing/stirring a neutral carbon black wetted with a wetting agent containing at least water and an oil-based varnish to convert the neutral carbon black from a water phase to an oily phase. An apparatus used in flushing is not particularly limited, and for example, a flusher (kneader) or a stirring apparatus having a mechanism capable of removing the wetting agent can be used.

In the method of producing an ink composition for offset printing of the present invention, the wetting agent is removed until the content of the wetting agent containing water in the flushed composition becomes preferably 2% by mass or less. Further, in the production method of the present invention, it is preferred to undergo the step of milling after completion of the steps of wetting, performing flushing and then removing the wetting agent. An apparatus for milling is not particularly limited, and for example, a roll mill or a bead mill can be used. In this step, the carbon black is milled until a particle diameter of the ink composition for offset printing becomes, for example, 5 µm or less which is smaller than a printed film thickness. This particle diameter can be measured with, for example, a grind gauge.

In the present invention, "an oil-based varnish for a printing ink containing at least one component of four components consisting of gilsonite, an aliphatic hydrocarbon resin having a softening point of 120 to 125°C, extracted from gilsonite, a petroleum resin and a heavy oil" used at the time of flushing has only to be in a state in which the oil-based varnish for a printing ink contains at least one component of the four components in a predetermined amount as a result at the time of flushing. Therefore, methods of adding the respective components at the time of preparing is not particularly limited, and the ink composition may be prepared by any method.

That is, the oil-based varnish for a printing ink may be prepared by dissolving the binder resin and at least one component of the four components in a vegetable oil component and/or a mineral oil component in advance when performing flushing so that the content of at least one component of the four components becomes a predetermined amount. And for example, the oil-based varnish for a printing ink may be prepared in such a way that the content of at least one component of the four components becomes a predetermined amount ultimately by a method in which the liquid heavy oil and a binder resin oil-based varnish formed by dissolving the binder resin in a vegetable oil component and/or a mineral oil component are separately added when the liquid heavy oil is used, or a method in which a varnish formed by dissolving at least one component of the four components in a vegetable oil component and/or a mineral oil component is used, and the varnish and the binder resin oil-based varnish formed by dissolving the binder resin in a vegetable oil component and/or a mineral oil component are separately added.

A method of producing an ink composition for offset printing using the oil-based varnish for a printing ink prepared by dissolving the binder resin and at least one component of the four components in a vegetable oil component and/or a mineral oil component in advance is not particularly limited, and example of this method include a method including the steps of putting/stirring the neutral carbon black and the wetting agent containing at least water in a disper or a flusher (kneader) to wet the neutral carbon black, then adding the oil-based varnish for a printing ink to the wetted substance of the neutral carbon black, flushing the resulting mixture with the flusher (kneader) or a stirring apparatus having a mechanism capable of removing the wetting agent, and removing the wetting agent until the content of the wetting agent in the composition obtained by flushing becomes preferably 2% by mass or less. There is a method in which after the above-mentioned method, the ink composition for offset printing is obtained by adding the oil-based varnish for a printing ink or the binder resin oil-based varnished as required, undergoing the step of milling/dispersing with a bead mill or a three-roll mill, and adjusting the obtained milled mixture to a prescribed viscosity by adding a residual material.

In addition, when the liquid heavy oil, and the binder resin oil-based varnish formed by dissolving the binder resin in a vegetable oil component and/or a mineral oil component are separately added at the time of flushing to prepare the oil-based varnish for a printing ink, the liquid heavy oil and the binder resin oil-based varnish can be separately added when performing flushing by the same step as in the above-mentioned method.
Further, when the varnish formed by dissolving at least one component of the four components in a vegetable oil component and/or a mineral oil component and the binder resin oil-based varnish formed by dissolving the binder resin in a vegetable oil component and/or a mineral oil component are separately added at the time of flushing to prepare the oil-based varnish for a printing ink, the varnish formed by dissolving at least one component of the four components in a vegetable oil component and/or a mineral oil component and the binder resin oil-based varnish can be separately added when performing flushing by the same step as in the above-mentioned method.

In addition, a proper amount (about 15% by mass or less with respect to the binder resin) of a gelling agent can be added to the binder resin oil-based varnish as required to crosslink the resin. In such a case, examples of the gelling agent to be used include aluminum alcoholates, aluminum chelate compounds and the like, and as preferable specific examples, aluminum triisopropoxide, mono-sec-butoxy aluminum diisopropoxide, aluminum tri-sec-butyoxide, ethyl acetoacetate aluminum diisopropoxide, aluminum tris-ethyl acetoacetate and the like can be exemplified.

The ink composition for offset printing prepared by the method of producing an ink composition for offset printing of the present invention described above is suitably used as an ink composition for offset printing not requiring good gloss and a high jet-black property, particularly an ink composition for penetration drying offset printing.

Further, by the method of producing an ink composition for offset printing of the present invention, it is possible to improve the productivity of inks considerably compared with the conventional method while using the neutral carbon black (particularly the neutral bead carbon black). Further, the ink composition for offset printing obtained has good dispersibility and temporal stability of carbon black.

### BEST MODE FOR CARRYING OUT THE INVENTION

Hereinafter, the present invention will be described in more detail by way of Examples, but the present invention is not limited to these Examples. In addition, "%" and "part(s)" refer to "% by mass" and "part (s) by mass", unless otherwise specified. Further, in the following Examples, Comparative Examples and Reference Examples, a bulk density was measured according to JIS K 6219 as described above. Further, as described above, an average primary particle diameter is an arithmetic mean value of particle diameters determined by the observation of particles through an electron microscope.

### (Example 1)

224 parts of a neutral bead carbon black for color (BLACK PEARLS430, produced by Cabot Corp.) having a pH of 7.0, a primary particle diameter of 27 nm and a bulk density of 0.42 g/cm³, and 224 parts of a wetting agent (running water) were mixed at 25°C for 30 minutes in a bench flusher (manufactured by Inoue Kikai Co., Ltd.) to wet the carbon black, and 114 parts of a gilsonite varnish 1 containing Gilsonite Selects 325 (gilsonite, produced by American Gilsonite Company), Gilsonite ER 125 (an aliphatic hydrocarbon resin having a softening point of 120 to 125°C extracted from gilsonite, produced by American Gilsonite Company), and AF Solvent No. 6 (trade name, a mineral oil component, a solvent for a printing ink, produced by Nippon Oil Corp.) in a mass ratio of 15:5:80 was added, and then 200 parts of a binder resin oil-based varnish 1 containing a rosin modified phenolic resin (a weight-average molecular weight 80000), a soybean oil, AF Solvent No. 6, and ALCH (ethyl acetoacetate aluminum diisopropoxide) in a mass ratio of 45:30:24:1 was added, and the resulting mixture was flushed at 50°C for 60 minutes (incidentally, herein, a substance formed by adding the binder resin oil-based varnish 1 to the gilsonite varnish 1 corresponds to an oil-based varnish 1 for a printing ink (refer to Table 1)). Thereafter, a main body of the flusher was inclined, and the transuded wetting agent was removed, and further the remaining wetting agent was removed under a reduced pressure at 100°C for 60 minutes to reduce the content of the wetting agent to 2% or less. Thereafter, to this, 302 parts of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 1 for offset printing. To 70 parts of this base ink 1 for offset printing, 5 parts of the binder resin oil-based varnish 1 and 15 parts of the AF Solvent No. 6 were added to obtain an ink composition 1 for offset printing.

### <Example 2>

A base ink 2 for offset printing was obtained by using the same materials and the same production conditions as in Example 1 except for changing the neutral carbon black to be used from the neutral bead carbon black for color of Example 1 to a neutral bead carbon black for rubber (N326, produced by Degussa AG.) having a pH of 7.5, a primary particle diameter of 30 nm and a bulk density of 0.46 g/cm³. To 70 parts of this base ink 2 for offset printing, 5 parts of the binder resin oil-based varnish 1 of Example 1 and 15 parts of the AF Solvent No. 6 were added to obtain an ink composition 2 for offset printing.

### (Example 3)

A base ink 3 for offset printing was obtained by using the same materials and the same production conditions as in Example 1 except for changing the gilsonite varnish to be used from the gilsonite varnish 1 to a gilsonite varnish 2 containing Gilsonite Selects 325 (gilsonite, produced by American Gilsonite Company), and a heavy oil (petroleum heavy oil, SNH-540, produced by SANKYO YUKA KOGYO K.K., aniline point 88°C; according to JIS K 2256) in a mass ratio of 20:80 (incidentally, herein, a substance formed by adding the binder resin oil-based varnish 1 to the gilsonite varnish 2 corresponds to an oil-based varnish 2 for a printing ink (refer to Table 1)). To 70 parts of this base ink 3 for offset printing, 5 parts of the binder resin oil-based varnish 1 of Example 1 and 15 parts of the AF Solvent No. 6 were added to obtain an ink composition 3 for offset printing.

### (Example 4)

A base ink 4 for offset printing was obtained by using the same materials and the same production conditions as in Example 1 except for changing the gilsonite varnish to be used from the gilsonite varnish to a gilsonite varnish 3 containing Gilsonite Selects 325 (gilsonite, produced by American Gilsonite Company), and a heavy oil (petroleum heavy oil, N40, produced by Magie Brothers Oil Company, aniline point 67°C; according to JIS K 2256) in a mass ratio of 20:80 (incidentally, herein, a substance formed by adding the binder resin oil-based varnish 1 to the gilsonite varnish 3 corresponds to an oil-based varnish 3 for a printing ink (refer to Table 1)). To 70 parts of this base ink 4 for offset printing, 5 parts of the binder resin oil-based varnish 1 of Example 1 and 15 parts of the AF Solvent No. 6 were added to obtain an ink composition 4 for offset printing.

### <Example 5>

A base ink 5 for offset printing was obtained by using the same materials and the same production conditions as in Example 1 except for changing the amount of the wetting agent of Example 1 from 224 parts to 120 parts. To 70 parts of this base ink 5 for offset printing, 5 parts of the binder resin oil-based varnish 1 of Example 1 and 15 parts of the AF Solvent No. 6 were added to obtain an ink composition 5 for offset printing.

### (Example 6)

A base ink 6 for offset printing was obtained by using the same materials and the same production conditions as in Example 1 except for changing the amount of the wetting agent of Example 1 from 224 parts to 416 parts. To 70 parts of this base ink 6 for offset printing, 5 parts of the binder resin oil-based varnish 1 of Example 1 and 15 parts of the AF Solvent No. 6 were added to obtain an ink composition 6 for offset printing.

### (Comparative Example 1)

224 parts of the neutral bead carbon black for color of Example 1 and 114 parts of the gilsonite varnish 1 of Example 1 were added, and then 200 parts of the binder resin oil-based varnish 1 of Example 1 was added, and the resulting mixture was mixed at 50°C for 120 minutes in a bench flusher (manufactured by Inoue Kikai Co., Ltd.) (incidentally, herein, a substance formed by adding the binder resin oil-based varnish 1 to the gilsonite varnish 1 corresponds to an oil-based varnish 1 for a printing ink (refer to Table 1)). Thereafter, to this, 302 parts of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 7 for offset printing. To 70 parts of this base ink 7 for offset printing, 5 parts of the binder resin oil-based varnish 1 of Example 1 and 15 parts of the AF Solvent No. 6 were added to obtain an ink composition 7 for offset printing.

### (Comparative Example 2)

224 parts of the neutral bead carbon black for color of Example 1 and 314 parts of the binder resin oil-based varnish 1 of Example 1 were mixed at 50°C for 120 minutes in a bench flusher (manufactured by Inoue Kikai Co., Ltd.). Thereafter, to this, 302 parts of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 8 for offset printing. To 70 parts of this base ink 8 for offset printing, 3 parts of the binder resin oil-based varnish 1 of Example 1 and 17 parts of the AF Solvent No. 6 were added to obtain an ink composition 8 for offset printing.

### (Comparative Example 3)

A base ink 9 for offset printing was obtained by using the same materials and the same production conditions as in Comparative Example 2 except for changing the neutral carbon black to be used from the neutral bead carbon black for color of Comparative Example 2 to the neutral bead carbon black for rubber of Example 2, having a pH of 7.5, a primary particle diameter of 30 nm and a bulk density of 0.46 g/cm³. To 70 parts or this base ink 9 for offset printing, 3 parts of the binder resin oil-based varnish 1 of Example 1 and 17 parts of the AF Solvent No. 6 were added to obtain an ink composition 9 for offset printing.

### (Comparative Example 4)

A base ink 10 for offset printing was obtained by using the same materials and the same production conditions as in Example 1 except for changing the amount of the wetting agent of Example 1 from 224 parts to 20 parts. To 70 parts of this base ink 10 for offset printing, 5 parts of the binder resin oil-based varnish 1 of Example 1 and 15 parts of the AF Solvent No. 6 were added to obtain an ink composition 10 for offset printing.

### (Comparative Example 5)

224 parts of a neutral powder carbon black for color (REGAL 300R, produced by Cabot Corp.) having a pH of 7.0, a primary particle diameter of 27 nm and a bulk density of 0.195 g/cm³, and 114 parts of the gilsonite varnish 1 of Example 1 were added, and then 200 parts of the binder resin oil-based varnish 1 of Example 1 was added, and the resulting mixture was mixed at 50°C for 120 minutes in a bench flusher (manufactured by Inoue Kikai Co., Ltd.). Thereafter, to this, 302 parts of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 11 for offset printing. To 70 parts of this base ink 11 for offset printing, 5 parts of the binder resin oil-based varnish 1 and 15 parts of the AF Solvent No. 6 were added to obtain an ink composition 11 for offset printing.

### (Example 7)

224 parts of a neutral powder carbon black for color (REGAL 300R, produced by Cabot Corp.) having a pH of 7.0, a primary particle diameter of 27 nm and a bulk density of 0.195 g/cm³, and 224 parts of a wetting agent (running water) were mixed at 25°C for 30 minutes in a bench flusher (manufactured by Inoue Kikai Co., Ltd.) to wet the carbon black, and 114 parts of the gilsonite varnish 1 described in Example 1 was added, and then 200 parts of the binder resin oil-based varnish 1 described in Example 1 was added, and the resulting mixture was flushed at 50°C for 60 minutes. Thereafter, a main body of the flusher was inclined, and the transuded wetting agent was removed, and further the wetting agent remaining in the base was removed under a reduced pressure at 100°C over 60 minutes to a moisture content of 2% or less. Thereafter, 302 parts of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 12 for offset printing. To 70 parts of this base ink 12 for offset printing, 5 parts of the binder resin oil-based varnish 1 and 15 parts of the AF Solvent No. 6 were added to obtain an ink composition 12 for offset printing.

### (Example 8)

224 parts of a neutral bead carbon black for color (BLACK PEARLS 430, produced by Cabot Corp.) having a pH of 7.0, a primary particle diameter of 27 nm and a bulk density of 0.42 g/cm³, and 224 parts of a wetting agent (running water) were mixed at 25°C for 30 minutes in a bench flusher (manufactured by Inoue Kikai Co., Ltd.) to wet the carbon black, and 114 parts of a gilsonite varnish 4 containing Gilsonite Selects 325 (gilsonite, produced by American Gilsonite Company), a petroleum resin (trade name, Nisseki Neopolymer grade 120, produced by Nippon Oil Corp.), and a heavy oil (trade name, SNH-540, produced by SANKYO YUKA KOGYO K.K.) in a mass ratio of 20:20:60 was added, and then 200 parts of the binder resin oil-based varnish 1 described in Example 1 was added, and the resulting mixture was flushed at 50°C for 60 minutes (incidentally, herein, a substance formed by adding the gilsonite varnish 4 to the binder resin oil-based varnish 1 corresponds to an oil-based varnish 4 for a printing ink (refer to Table 1)). Thereafter, a main body of the flusher was inclined, and the transuded wetting agent was removed, and further the remaining wetting agent was removed under a reduced pressure at 100°C for 60 minutes to reduce the content of the wetting agent to 2% or less. Thereafter, to this, 302 parts of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 13 for offset printing. To 70 parts of this base ink 13 for offset printing, 5 parts of the binder resin oil-based varnish 1 and 15 parts of the AF Solvent No. 6 were added to obtain an ink composition 13 for offset printing.

### (Example 9) (Industrial-Scale Example)

560 kg of a neutral bead carbon black for color (BLACK PEARLS430, produced by Cabot Corp.) having a pH of 7.0, a primary particle diameter of 27 nm and a bulk density of 0.42 g/cm³, and 560 kg of a wetting agent (running water) were mixed at 25°C for 30 minutes in a productive flusher (manufactured by Inoue Kikai Co., Ltd.) to wet the carbon black, and 285 kg of the gilsonite varnish 1 described in Example 1 was added, and then 500 kg of the binder resin oil-based varnish 1 described in Example 1 was added, and the resulting mixture was flushed at 50°C for 60 minutes (incidentally, herein, a substance formed by adding the binder resin oil-based varnish to the gilsonite varnish 1 corresponds to an oil-based varnish 1 for a printing ink (refer to Table 1)). Thereafter, a main body of the flusher was inclined, and the transuded wetting agent was removed, and further the remaining wetting agent was removed under a reduced pressure at 100°C for 90 minutes to reduce the content of the wetting agent to 2% or less. Thereafter, to this, 755 kg of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 14 for offset printing. To 700 kg of this base ink 14 for offset printing, 50 kg of the binder resin oil-based varnish 1 and 150 kg of the AF Solvent No. 6 were added to obtain an ink composition 14 for offset printing.

### (Comparative Example 6) (Industrial-Scale Comparative Example)

In a productive flusher (manufactured by Inoue Kikai Co., Ltd.), 560 kg of the neutral bead carbon black for color of Example 1 and 285 kg of the gilsonite varnish 1 of Example 1 were added, and then 500 kg of the binder resin oil-based varnish 1 of Example 1 was charged, and the resulting mixture was mixed at 50°C for 120 minutes (incidentally, herein, a substance formed by adding the binder resin oil-based varnish 1 to the gilsonite varnish 1 corresponds to an oil-based varnish 1 for a printing ink (refer to Table 1)). Thereafter, to this, 755 kg of the binder resin oil-based varnish 1 was added, and the resulting mixture was milled and dispersed until measurement of a particle diameter by a grind gauge became 5 µm or less with a three-roll mill (manufactured by Inoue Kikai Co., Ltd.) of 45°C to obtain a base ink 15 for offset printing. To 700 kg of this base ink 15 for offset printing, 50 kg of the binder resin oil-based varnish 1 of Example 1 and 150 kg of the AF Solvent No. 6 were added to obtain an ink composition 15 for offset printing.

### <Evaluation>

The dispersibility of each ink composition for offset printing of Examples 1 to 9, and Comparative Examples 1 to 6 were evaluated according the following methods. The results of the evaluations are shown in Table 1.

### (1) Dispersibility

A base ink was dispersed in such a way that a particle diameter measured by a grind gauge became 5 µm or less at a temperature of 45°C and at a constant pressure using a three-roll mill (manufactured by Inoue Kikai Co., Ltd.). Number of millings by the roll mill at this time was taken as a measure of the dispersibility.

### (2) Evaluation of printed paper quality

The ink compositions for penetration drying offset printing of the present invention of Examples 1 to 9, and the conventional ink compositions for penetration drying offset printing of Comparative Examples 1 to 6 were developed on a woody paper (produced by Oji Paper Co., Ltd., woody paper 40.5K) by a printing suitability tester PM-902PT (manufactured by SMT Co., Ltd.), and these developed substances were visually evaluated. The developed substances of Examples 1 to 9 were superior in an even printing property and a density feeling to those of Comparative Examples 1 to 6.

### (3) Relative evaluation of dispersibility of a neutral carbon black in an ink composition for offset printing

The gloss and the degree of jet black of the printed substances stand in correlation with the dispersibility of the neutral carbon black in an ink composition. That is, when the neutral carbon black remains undispersed and a particle size distribution becomes broad, the gloss and the degree of jet black are deteriorated, and to the contrary when an undispersed neutral carbon black disappears and the particle size distribution becomes narrow, the gloss and the degree of jet black become good. By use of this relationship, the gloss and the degree of jet black of the printed substance, on which the ink composition for offset printing was printed, were evaluated, and thereby the dispersibility of the neutral carbon black in the ink composition for offset printing was relatively evaluated.

### (2) Evaluation of gloss and degree of jet-black

The ink compositions for offset printing of Examples 1 to 9, and Comparative Examples 1 to 6 are developed on coated paper (O.K Topkote 73K) by a printing suitability tester PM-902PT (manufactured by SMT Co., Ltd.). A gloss value of this developed substance was measured with a gloss meter GM-26 (manufactured by Murakami Color Research Laboratory Co., Ltd.). In addition, as for the degree of jet-black, L* was measured with a colorimetric spectrophotometer GretagMacbeth SpectroEye (manufactured by GretagMacbeth AG.). Smaller L* indicates that a blackish tone is stronger.

**Table 1**

| ·Compositions of oil-based varnishes for printing ink (*1) | | | | |
|---|---|---|---|---|
| Oil-based varnish for printing ink (*2) | 1 | 2 | 3 | 4 |
| Gilsonite varnish 1 | 114 | - | - | - |
| Gilsonite varnish 2 | - | 114 | - | - |
| Gilsonite varnish 3 | - | - | 114 | - |
| Gilsonite varnish 4 | - | - | - | 114 |
| Binder resin oil-based varnish 1 | 200 | 200 | 200 | 200 |
| Total | 314 | 314 | 314 | 314 |

| | | | | |
|---|---|---|---|---|
| *1 The measure of amount in Table refers to "parts by weight". *2 Gilsonite varnish 1 to 4 is substances formed by adding a gilsonite varnish and a binder resin oil-based varnish separately in a flasher. | | | | |

**[Table 2]**

| ·Compositions of base inks for offset printing (*1) | | | | | | | | | |
|---|---|---|---|---|---|---|---|---|---|
| | Example 1 | Example 2 | Example 3 | Example 4 | Example 5 | Example 6 | Example 7 | Example 8 | Example 9 |
| 27nm neutral bead CB for color(*2) | 224 | - | 224 | 224 | 224 | 224 | - | 224 | 560 kg |
| 30nm neutral bead CB for rubber | - | 224 | - | - | - | - | - | - | - |
| 27nm neutral powder CB for color | - | - | - | - | - | - | 224 | - | - |
| Water | 224 | 224 | 224 | 224 | 120 | 416 | 224 | 224 | 560 kg |
| Oil-based varnish 1 for printing ink | 314 | 314 | - | - | 314 | 314 | 314 | - | 785 kg |
| Oil-based varnish 2 for printing ink | - | - | 314 | - | - | - | - | - | - |
| Oil-based varnish 3 for printing ink | - | - | - | 314 | - | - | - | - | - |
| Oil-based varnish 4 for printing ink | - | - | - | - | - | - | - | 314 | - |
| Binder resin oil-based varnish 1 | 302 | 302 | 302 | 302 | 302 | 302 | 302 | 302 | 755 kg |
| Totai(*3) | 840 | 840 | 840 | 840 | 840 | 840 | 840 | 840 | 2100 kg |
| Base ink for offset printing | 1 | 2 | 3 | 4 | 5 | 6 | 12 | 13 | 14 |

| | | | | | | | | | |
|---|---|---|---|---|---|---|---|---|---|
| *1 The measure of amount in Table refers to "parts" except for Example 9. *2 CB: carbon black *3 Total amount of base ink for offset printing obtained (the amount except for wetting agent) | | | | | | | | | |

**Table 3**

| | | | | | | |
|---|---|---|---|---|---|---|
| ·Compositions of base inks for offset printing (*1) | | | | | | |

| | Comparative Example 1 | Comparative Example 2 | Comparative Example 3 | Comparative Example 4 | Comparative Example 5 | Comparative Example 6 |
|---|---|---|---|---|---|---|
| 27nm neutral bead CB for color(*2) | 224 | 224 | - | 224 | - | 560kg |
| 30nm neutral bead CB for rubber | - | - | 224 | - | - | - |
| 27nm neutral powder CB for color | - | - | - | - | 224 | - |
| Water | - | - | - | 20 | - | - |
| Oil-based varnish 1 for printing ink | 314 | - | - | 314 | 314 | 785 kg |
| Oil-based varnish 2 for printing ink | - | - | - | - | - | - |
| Oil-based varnish 3 for printing ink | - | - | - | - | - | - |
| Oil-based varnish 4 for printing ink | - | - | - | - | - | - |
| Binder resin oil-based varnish 1 | 302 | 314+302 | 314+302 | 302 | 302 | 755 kg |
| Total (*3) | 840 | 840 | 840 | 840 | 840 | 2100 kg |
| Base ink for offset printing | 7 | 8 | 9 | 10 | 11 | 15 |

| | | | | | | |
|---|---|---|---|---|---|---|
| *1 The measure of amount in Table refers to "parts" except for Comparative Example 6. *2 CB: carbon black *3 Total amount of base ink for offset printing obtained (the amount except for wetting agent) | | | | | | |

**Table 4**

| ·Compositions of base inks for offset printing(*1) | | | | | | | | | |
|---|---|---|---|---|---|---|---|---|---|
| Species of carbon black(*2) | Neutral bead CB for color | | | | | | | | |
| | Example 1 | Example 3 | Example 4 | Example 5 | Example 6 | Example 8 | Comparative Example 1 | Comparative Example 2 | Comparative Example 4 |
| Base ink 1 for offset printing | 70 | - | - | - | - | - | - | - | - |
| Base ink 2 for offset printing | - | - | - | - | - | - | - | - | - |
| Base ink 3 for offset printing | - | 70 | - | - | - | - | - | - | - |
| Base ink 4 for offset printing | - | - | 70 | - | - | - | - | - | - |
| Base ink 5 for offset printing | - | - | - | 70 | - | - | - | - | - |
| Base ink 6 for offset printing | - | - | - | - | 70 | - | - | - | - |
| Base ink 7 for offset printing | - | - | - | - | - | - | 70 | - | - |
| Base ink 8 for offset printing | - | - | - | - | - | - | - | 70 | - |
| Base ink 9 for offset printing | - | - | - | - | - | - | - | - | - |
| Base ink 10 for offset printing | - | - | - | - | - | - | - | - | 70 |
| Base ink 11 for offset printing | - | - | - | - | - | - | - | - | - |
| Base ink 12 for offset printing | - | - | - | - | - | - | - | - | - |
| Base ink 13 for offset printing | - | - | - | - | - | 70 | - | - | - |
| Base ink 14 for offset printing | - | - | - | - | - | - | - | - | - |
| Base ink 15 for offset printing | - | - | - | - | - | - | - | - | - |
| Binder resin oil-based varnish | 15 | 5 | 5 | 5 | 5 | 5 | 5 | 3 | 5 |
| AF Solvent No.6 | 15 | 15 | 15 | 15 | 15 | 15 | 15 | 17 | 15 |
| Total | 90 | 90 | 90 | 90 | 90 | 90 | 90 | 90 | 90 |
| Ink composition for offset printing | 1 | 3 | 4 | 5 | 6 | 13 | 7 | 8 | 10 |

| | | | | | | | | | |
|---|---|---|---|---|---|---|---|---|---|
| *1 The measure of amount in Table refers to "parts". *2 CB: carbon black | | | | | | | | | |

**Table 5**

| ·Compositions of base inks for offset printing(*1) | | | | | | |
|---|---|---|---|---|---|---|
| Species of carbon black(*2) | Neutral bead CB for rubber | | Neutral powder CB | | Neutral bead CB for color | |
| | | | | | Industrial-Scale | Industrial-Scale |
| | Example 2 | Comparative Example 3 | Example 7 | Comparative Example 5 | Example 9 | Comparative Example 6 |
| Base ink 1 for offset printing | - | - | - | - | - | - |
| Base ink 2 for offset printing | 70 | - | - | - | - | - |
| Base ink 3 for offset printing | - | - | - | - | - | - |
| Base ink 4 for offset printing | - | - | - | - | - | - |
| Base ink 5 for offset printing | - | - | - | - | - | - |
| Base ink 6 for offset printing | - | - | - | - | - | |
| Base ink 7 for offset printing | - | - | - | - | - | - |
| Base ink 8 for offset printing | - | - | - | - | - | - |
| Base ink 9 for offset printing | - | 70 | - | - | - | - |
| Base ink 10 for offset printing | - | - | - | - | - | - |
| Base ink 11 for offset printing | - | - | - | 70 | - | - |
| Base ink 12 for offset printing | - | - | 70 | - | - | - |
| Base ink 1 for offset printing | - | - | - | - | - | - |
| Base ink 14 for offset printing | - | - | - | - | 700kg | - |
| Base ink 15 for offset printing | - | - | - | - | - | 700kg |
| Binder resin oil-based varnish 1 | 5 | 3 | 5 | 5 | 50kg | 50kg |
| AF Solvent No.6 | 15 | 17 | 15 | 15 | 150kg | 150kg |
| Total | 90 | 90 | 90 | 90 | 900kg | 900kg |
| Ink composition for offset printing | 2 | 9 | 12 | 11 | 14 | 15 |

| | | | | | | |
|---|---|---|---|---|---|---|
| *1 The measure of amount in Table refers to "parts" except for Example 9 and Comparative Example 6. *2 CB: carbon black | | | | | | |

| ·Evaluation of ink compositions for offset printing | | | | | | | | | |
|---|---|---|---|---|---|---|---|---|---|
| Species of carbon black(*1) | Neutral bead CB for color | | | | | | | | |
| | Example 1 | Example 3 | Example 4 | Example 5 | Example 6 | Example 8 | Comparative Example 1 | Comparative Example 2 | Comparative Example 4 |
| Ink compositions for offset printing | 1 | 3 | 4 | 5 | 6 | 13 | 7 | 8 | 10 |
| <Evaluation> | | | | | | | | | |
| Number of milting | | | | | | | | | |
| Number of passes of three-roll mill | 1 time | 1 time | 1 time | 1 time | 1 time | 1 time | 3 times | 4 times | 2 times |
| Gross | 50.6 | 50.6 | 50.4 | 50.3 | 50.1 | 50.5 | 47.1 | 41.2 | 49.2 |
| Degree of jet-black (L*) | 19.2 | 19.1 | 19.3 | 19.4 | 19.4 | 19.2 | 21.5 | 23.2 | 19.9 |
| <Production time> | | | | | | | | | |
| Wetting time | 30 min | 30 min | 30 min | 30 min | 30 min | 30 min | - | - | 30 min |
| Flushing time | 60 min | 60 min | 60 min | 60 min | 60 min | 60 min | - | - | 60 min |
| Time for removing water | 60 min | 60 min | 60 min | 60 min | 60 min | 60 min | - | - | 60 min |
| Time for mixing and kneading | - | - | - | - | - | | 120 min | 120 min | - |
| Time for milling with three-roll mill | 50 min | 50 min | 50 min | 50 min | 50 min | 50 min | 150 min | 200 min | 100 min |
| Total time | 200 min | 200 min | 200 min | 200 min | 200 min | 200 min | 270 min | 320 min | 250 min |

| | | | | | | | | | |
|---|---|---|---|---|---|---|---|---|---|
| *1 CB: carbon black | | | | | | | | | |

**Table 7**

| *Evaluation of ink compositions for offset printing | | | | | | |
|---|---|---|---|---|---|---|
| Species of carbon black(*1) | Neutral bead CB for rubber | | Neutral powder CB | | Neutral bead CB for color | |
| | | | | | Industrial-Scale | Industrial-Scale |
| | Example 2 | Comparative Example 3 | Example 7 | Comparative Example 5 | Example 9 | Comparative Example 6 |
| Ink compositions for offset printing | 2 | 9 | 12 | 11 | 14 | 15 |
| <Evaluation> | | | | | | |
| Number of milling | | | | | | |
| Number of passes of three-roll mill | 1 time | 4 times | 1 time | 2 times | 1 time | 2 times |
| Gross | 50.1 | 40.5 | 50.8 | 48.8 | 51.4 | 47.8 |
| Degree of jet-black(L*) | 19.5 | 23.7 | 19.0 | 21.4 | 18-6 | 21 |
| <Production time> | | | | | | |
| Wetting time | 30 min | - | 30 min | - | 30 min | - |
| Flushing time | 60 min | - | 60 min | - | 60 min | - |
| Time for removing water | 60 min | - | 60 min | - | 90 min | - |
| Time for mixing and kneading | - | 120 min | - | 120 min | - | 120 min |
| Time for milling with three-roll mill | 50 min | 200 min | 50 min | 100 min | 600 min | 1080 min |
| Total time | 200 min | 320 min | 200 min | 220 min | 780 min | 1200 min |

| | | | | | | |
|---|---|---|---|---|---|---|
| *1 CB: carbon black | | | | | | |

As shown in Tables 6 and 7, the total production times of the ink compositions 1 to 6, 12, and 13 for offset printing of the present invention, obtained in Examples 1 to 8, can be shortened compared with those of the ink compositions 7 to 11 for offset printing obtained in Comparative Examples. In addition, the total production time of the ink composition 14 for offset printing of the present invention, obtained in Example 9 on an industrial scale, can be shortened compared with that of the ink composition 15 for offset printing obtained in Comparative Example 6 on an industrial scale. Further, it can be understood that the ink compositions 1 to 6, 12, 13, and 14 for offset printing of the present invention are superior in the dispersibility since the ink compositions for offset printing of the present invention have high gloss values and small values of L*.

### INDUSTRIAL APPLICABILITY

The production method of the present invention can provide an ink composition for offset printing, which can improve the productivity of inks considerably compared with the conventional production method, and has good dispersibility even when the low-cost neutral carbon black is used. The ink composition for offset printing prepared by the production method of the present invention is suitably used as an ink composition for offset printing not requiring good gloss and a high jet-black property, particularly an ink composition for penetration drying offset printing.

## Claims

1. A method of producing an ink composition for offset printing, comprising the steps of
wetting 300 parts by mass of a neutral carbon black with 30 to 900 parts by mass of a wetting agent containing at least water,
performing flushing of said wetted neutral carbon black using an oil-based varnish for a printing ink containing at least one component of four components consisting of gilsonite, an aliphatic hydrocarbon resin having a softening point of 120 to 125°C, extracted from gilsonite, a petroleum resin and a heavy oil, and then
removing the wetting agent.

2. The method of producing an ink composition for offset printing according to claim 1, further comprising the step of
milling with a roll mill or a bead mill after completion of said steps of wetting, performing flushing and then removing the wetting agent.

3. The method of producing an ink composition for offset printing according to claim 1 or 2,
wherein a neutral carbon black having a bulk density of 0.1 to 0.8 g/cm³ and an average primary particle diameter of 15 to 70 nm is used as said neutral carbon black.

4. The method of producing an ink composition for offset printing according to any one of claims 1 to 3,
wherein said neutral carbon black is a neutral bead carbon black having a bulk density of 0.3 to 0.8 g/cm³ and an average primary particle diameter of 15 to 70 nm.

5. An ink composition for offset printing prepared by the method of producing an ink composition for offset printing according to any one of claims 1 to 4.

6. The ink composition for offset printing according to claim 5,
wherein the ink composition for offset printing is an ink composition for penetration drying offset printing.
